# EUROPÄISCHE PATENTSCHRIFT

(11) **EP 1 430 701 B1**
(45) Veröffentlichungstag und Bekanntmachung des Hinweises auf die Patenterteilung: **22.08.2007**
(21) Anmeldenummer: 02774374.9
(22) Anmeldetag: 16.09.2002
(51) Int. Cl.: H04L 29/08

(54) **VERFAHREN ZUM STEUERN VON LEISTUNGSMERKMALEN IN PAKETORIENTIERTEN KOMMUNIKATIONSSYSTEMEN**
METHOD FOR FEATURE CONTROL IN PACKET-ORIENTED COMMUNICATION NETWORKS
PROCEDE DE COMMANDE DE SERVICES SUPPLEMENTAIRES DANS DES SYSTEMES DE COMMUNICATION ORIENTES PAR PAQUETS

(30) Priorität: 25.09.2001 DE 10147151
(43) Veröffentlichungstag der Anmeldung: 23.06.2004
(73) Patentinhaber: SIEMENS AKTIENGESELLSCHAFT, 80333 München (DE)
(72) Erfinder: KLAGHOFER, Karl, 81373 München (DE); MÜLLER, Heribert, A-3730 Eggenburg (AT); MÜLLER, Harald, 82205 Gilching (DE); TOTZKE, Jürgen, 85586 Poing (DE)
(86) Internationale Anmeldenummer: PCT/DE2002/003457
(87) Internationale Veröffentlichungsnummer: WO 2003/028349

(56) Entgegenhaltungen:
- WO-A-99/29081
- "DIGITAL CELLULAR TELECOMMUNICATIONS SYSTEM (PHASE 2+) (GSM);UNIVERSAL MOBILE TELECOMMUNICATIONS SYSTEM (UMTS): TECHNICAL REPORTON PRE-PAGING (3G TR 23.908 VERSION 3.0.0 RELEASE 1999)" ETSI TR 123 908 V3.0.0, XX, XX, 2000, Seiten 1-18, XP002150277

## Beschreibung

In zeitgemäßen Kommunikationssystemen werden Echtzeitverbindungen, z.B. zur Sprach-, Video- oder Multimediakommunikation, in zunehmendem Maße auch über paketorientierte Kommunikationsnetze, wie z.B. lokale Netze (LAN: Local Area Network) oder Weitverkehrsnetze (WAN: Wide Area Network), geführt. Auf dieser Technik basiert beispielsweise die sogenannte Internettelefonie, die häufig auch als VoIP-Telefonie (VoIP: Voice/Video-over-Internetprotokoll) bezeichnet wird.

Moderne paketorientierte Kommunikationssysteme, insbesondere solche gemäß der ITU-T-Empfehlung H.323, stellen eine Vielzahl aus der herkömmlichen, leitungsvermittelten Kommunikationstechnik bekannte Leistungsmerkmale, wie z.B. Rufweiterschaltung, Rufangebot, Rufaufschaltung oder Anklopfen, bereit. Da in derartigen paketorientierten Kommunikationssystemen Verbindungen zu Endeinrichtungen ganz unterschiedlichen Typs möglich sind, kann das Problem auftreten, dass eine Endeinrichtung ein Leistungsmerkmal anfordert, das von einem Verbindungspartner dieser Endeinrichtung nicht bedient werden kann. In einem solchen Fall läuft die Leistungsmerkmalsanforderung ins Leere, was insbesondere in paketorientierten Kommunikationsnetzen erst nach Ablauf einer verhältnismäßig langen Wartezeit erkannt wird. Für einen Benutzer der Endeinrichtung führen derartige, sogenannte Time-out-Effekte zu unangenehmen Verzögerungen. Als besonders schwerwiegend erweist sich dieses Problem bei Verbindungen zwischen paketorientierten Kommunikationssystemen, die hinsichtlich ihrer Konfiguration und Administration voneinander unabhängig sind.

Es ist Aufgabe der vorliegenden Erfindung ein Verfahren zum Steuern von Leistungsmerkmalen in paketorientierten Kommunikationssystemen anzugeben, bei dem derartige Verzögerungen vermieden werden können.

Gelöst wird diese Aufgabe durch ein Verfahren mit den Merkmalen des Patentanspruches 1.

Beim erfindungsgemäßen Verfahren wird vor Übertragung einer Verbindungsaufbaumeldung, wobei die Übertragung von einer Ursprungs-Endeinrichtung zu einer Ziel-Endeinrichtung erfolgt, eine ein Leistungsmerkmalprofil der Ziel-Endeinrichtung betreffende Leistungsmerkmalinformation in Richtung der Ursprungs-Endeinrichtung übermittelt. Mit der Verbindungsaufbaumeldung wird dann eine Leistungsmerkmalanforderung abhängig von der übermittelten Leistungsmerkmalinformation übertragen.

Die Leistungsmerkmalsanforderung kann somit an das Leistungsmerkmalsprofil der Ziel-Endeinrichtung angepasst werden. Auf diese Weise kann vermieden werden, dass mit der Verbindungsaufbaumeldung ein Leistungsmerkmal angefordert wird, das von der Ziel-Endeinrichtung nicht unterstützt wird. Eine solche vergebliche Leistungsmerkmalanforderung hätte einen Abbruch des Verbindungsaufbaus oder zumindest dessen erhebliche Verzögerung zur Folge.

Vorteilhafte Ausführungsformen und Weiterbildungen der Erfindung sind in den abhängigen Ansprüchen angegeben.

Gemäß einer vorteilhaften Ausführungsform der Erfindung kann die Übermittlung der Leistungsmerkmalinformation durch eine spezifische Anfragemeldung veranlasst werden. So kann z.B. die Ursprungs-Endeinrichtung vor Übertragung der Verbindungsaufbaumeldung eine spezifische Anfragemeldung zur Ziel-Endeinrichtung oder zu einer für die Ziel-Endeinrichtung zuständigen Verbindungssteuerung übermitteln, um die Leistungsmerkmalinformation abzufragen. Alternativ dazu kann die Leistungsmerkmalinformation auch ohne Anfrage übermittelt oder zwischen einer Domäne der Ursprungs-Endeinrichtung und einer Domäne der Ziel-Endeinrichtung ausgetauscht werden.

Weiterhin kann die Übermittlung der Leistungsmerkmalinformation auch durch eine eigentlich für andere Zwecke vorgesehene Signalisierungsmeldung veranlasst werden. Dies hat den Vorteil, dass keine spezifische Anfragemeldung im Kommunikationssystem zu definieren ist.

Nach einer besonders vorteilhaften Ausführungsform der Erfindung kann die Leistungsmerkmalinformation im Rahmen einer Adressauflösungsprozedur übermittelt werden. Insbesondere kann die Leistungsmerkmalinformation als zusätzliches Informationselement innerhalb einer Adressinformationsmeldung übermittelt werden. Eine derartige Kombination der Übermittlung der Leistungsmerkmalinformation mit einer vor dem eigentlichen Verbindungsaufbau stattfindenden Adressauflösungsprozedur hat den Vorteil, dass keine zusätzlichen Meldungssequenzen zu übermitteln sind. Der eigentliche Verbindungsaufbau wird somit durch die Übermittlung der Leistungsmerkmalsinformation nicht zusätzlich verzögert.

Gemäß einer weiteren vorteilhaften Ausführungsform der Erfindung wird die Leistungsmerkmalsinformation bis zur Ursprungs-Endeinrichtung übermittelt, wo die nachfolgend zu übertragende Leistungsmerkmalanforderung abhängig von der empfangenen Leistungsmerkmalinformation generiert oder geändert wird. Die Änderung der Leistungsmerkmalanforderung kann vorzugsweise interaktiv mit einem Benutzer der Ursprungsendeinrichtung erfolgen. Beispielsweise kann so eine Leistungsmerkmalsanforderung für das Leistungsmerkmal *Anrufaufschaltung* nach Empfang der Leistungsmerkmalinformation in eine Leistungsmerkmalanforderung für das Leistungsmerkmal Anklopfen abgeändert werden, wenn durch die Leistungsmerkmalinformation angezeigt wird, dass die Ziel-Endeinrichtung das Leistungsmerkmal *Rufaufschaltung* nicht unterstützt.

Weiterhin kann nach einer Übermittlung der Leistungsmerkmalinformation zur Ursprungs-Endeinrichtung eine Bedienoberfläche der Ursprungs-Endeinrichtung abhängig von der empfangenen Leistungsmerkmalinformation ausgebildet werden. So können beispielsweise von der Bedienoberfläche der Ursprungs-Endeinrichtung nur die von der Ziel-Endeinrichtung gemäß der empfangenen Leistungsmerkmalsinformation unterstützten Leistungsmerkmale angeboten werden.

Nach einer vorteilhaften Weiterbildung der Erfindung wird die Leistungsmerkmalinformation in einer Netzübergangseinrichtung gespeichert. Die nachfolgend zu übertragende Leistungsmerkmalanforderung wird dann durch die Netzübergangseinrichtung abhängig von der gespeicherten Leistungsmerkmalinformation weitergeleitet und/oder umgesetzt. Dies ist insbesondere dann sehr vorteilhaft, wenn die Ursprungs-Endeinrichtung und die Ziel-Endeinrichtung verschiedenen, durch die Netzübergangseinrichtung gekoppelten Kommunikationssystemen angehören. Anhand der gespeicherten Leistungsmerkmalinformation kann die Netzübergangseinrichtung die nachfolgend zu übertragende Leistungsmerkmalanforderung je nach Leistungsmerkmalsprofil der Ziel-Endeinrichtung bzw. des diese enthaltenden Kommunikationsnetzes weiterleiten, umsetzen, terminieren und/oder quittieren.

Gemäß einer vorteilhaften Ausführungsform der Erfindung kann die Verbindungsaufbaumeldung über ein Kommunikationssystem gemäß der ITU-T-Empfehlung H.323 oder gemäß SIP-Standard (Session Initiation Protocol) des IETF-Forums übertragen werden.

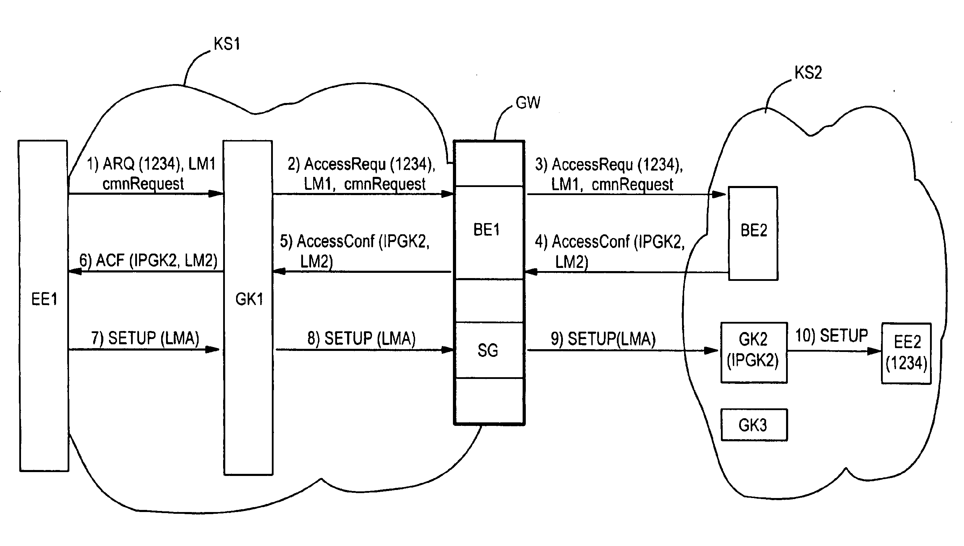

Ein Ausführungsbeispiel der Erfindung wird nachfolgend anhand der Zeichnung näher erläutert.
Die Figur zeigt zwei gekoppelte, paketorientierte Kommunikationssysteme in schematischer Darstellung.

In der Figur sind zwei paketorientierte Kommunikationssysteme KS1 und KS2 schematisch dargestellt, die über eine als Gateway GW ausgebildete Netzübergangseinrichtung gekoppelt sind. Die Kommunikationssysteme KS1 und KS2 sind als internetprotokollbasierte VoIP-Systeme (Voice/Video over Internetprotocol) für Echtzeitkommunikationsverbindungen zur Sprach-, Video- und/oder Multimediakommunikation ausgebildet. Für das vorliegende Ausführungsbeispiel sei angenommen, dass die Kommunikationssysteme KS1 und KS2 gemäß der ITU-T-Empfehlung H.323 realisiert sind. Alternativ dazu könnte zumindest eines der Kommunikationssysteme KS1 und KS2 dem SIP-Standard des IETF-Forums entsprechen. Typischerweise kann das Kommunikationssystem KS1 ein privates Unternehmensnetz (Enterprise Network) und das Kommunikationssystem KS2 ein Netzwerk eines Netzbetreibers (Carrier Network) oder ein weiteres externes Unternehmensnetz sein.

Das Kommunikationssystem KS1 weist neben dem Gateway GW einen sogenannten Gatekeeper GK1 als Verbindungssteuerung gemäß H.323-Empfehlung sowie eine Endeinrichtung EE1 auf. Das Kommunikationssystem KS2 verfügt seinerseits über zwei Gatekeeper GK2 und GK3 gemäß H.323-Empfehlung sowie über eine Endeinrichtung EE2, der eine Rufnummer 1234 als Endeinrichtungsadresse zugeordnet ist. Die Gatekeeper GK1, GK2 und GK3 dienen im Wesentlichen zum Steuern und Verwalten von Echtzeitkommunikationsverbindungen sowie zur Zugangskontrolle und zur Adressauflösung. Der Gatekeeper GK1 ist dabei für Verbindungen mit der Endeinrichtung EE1 und der Gatekeeper GK2 für Verbindungen mit der Endeinrichtung EE2 zuständig. Dem Gatekeeper GK2 ist ferner als Netzwerkadresse eine IP-Adresse IPGK2 (IP: Internetprotokoll) zugeordnet.

Die Endeinrichtungen EE1 und EE2 können z.B. als herkömmliche Kommunikationsendgeräte oder auch als Personalcomputer, Anwendungsprogramme oder Client-Anwendungen ausgebildet sein.

Der Gateway GW weist als Funktionskomponenten einen sogenannten Signalisierungs-Gateway SG (Signalling Gateway) zur kommunikationssystemübergreifenden Signalisierung sowie eine Adressauflösungseinrichtung BE1 zur kommunikationssystemübergreifenden Adressauflösung auf. Die Adressauflösungseinrichtung BE1 ist im vorliegenden Ausführungsbeispiel als sogenanntes Border-Element gemäß der ITU-T-Empfehlung H.225.0 Annex G ausgebildet.

Eine weitere Adressauflösungseinrichtung BE2 zur kommunikationssystemübergreifenden Adressauflösung ist im Kommunikationssystem KS2 enthalten.

In VoIP-Systemen ist vor einem eigentlichen Verbindungsaufbau zu einer durch eine gewählte Zieladresse identifizierten Ziel-Endeinrichtung eine Adressauflösung durchzuführen, um aus der Zieladresse eine Netzwerkadresse abzuleiten, anhand der Kommunikationsdatenpakete im Kommunikationsnetz transportiert werden können. Die Zieladresse kann hierbei z.B. eine Rufnummer oder eine sogenannte URI (Universal Resource Identifier) sein. Eine derartige Adressauflösung kann für Verbindungen zwischen verschiedenen sogenannten Gatekeeper-Zonen (Inter Zone), für Verbindungen zwischen verschiedenen administrativen Domänen (Inter Domain) oder für Verbindungen zwischen verschiedenen VoIP-Systemen z.B. gem. der ITU-T-Empfehlung H.225.0 Annex G realisiert sein.

Im Folgenden wird im Rahmen des Ausführungsbeispiels ein Verbindungsaufbau von der Endeinrichtung EE1 des Kommunikationssystems KS1 zur Endeinrichtung EE2 des Kommunikationssystems KS2 betrachtet. Der Verbindungsaufbau gliedert sich in zehn Rufphasen 1 - 10.

Der Verbindungsaufbau wird durch einen Teilnehmer an der Endeinrichtung EE1 durch Eingabe der Rufnummer 1234 der Ziel-Endeinrichtung EE2 initiiert. Infolgedessen übermittelt die Endeinrichtung EE1 in Rufphase 1 eine Zugangsanforderungsmeldung ARQ (Admission Request) gemäß den ITU-T-Empfehlungen H.323 und H.225.0 zum Gatekeeper GK1. Die Zugangsanforderungsmeldung ARQ enthält die vom Gatekeeper GK1 in eine Netzwerkadresse aufzulösende Zielrufnummer 1234. Der Gatekeeper GK1 kann die Zielrufnummer 1234 im vorliegenden Ausführungsbeispiel jedoch nicht auflösen, da sich die gerufene Endeinrichtung EE2 nicht im Zuständigkeitsbereich des Gatekeepers GK1 befindet. Der Gatekeeper GK1 übermittelt daher in Rufphase 2 eine Adressauflösungsanforderung *AccessRequ* (Access Request), z.B. gem. Annex G der H.225.0-Empfehlung, zusammen mit der Zielrufnummer 1234 zur Adressauflösungseinrichtung BE1, die Adressinformation mit dem anderen VoIP-System KS2 austauschen kann.

Falls die Adressauflösungseinrichtung BE1 eine der Zielrufnummer 1234 zugeordnete Netzwerkadresse, über die die Endeinrichtung EE2 erreichbar ist, nicht bereits gespeichert hat, übermittelt die Adressauflösungseinrichtung BE1 in Rufphase 3 die Adressauflösungsanforderung *AccessRequ* zusammen mit der Zielrufnummer 1234, z.B. gem. Annex G der H.225.0-Empfehlung, zur Adressauflösungseinrichtung BE2 des Kommunikationssystems KS2.

Mit den in den Rufphasen 1, 2 und 3 übermittelten Meldungen kann optional eine Leistungsmerkmalinformation LM1 übertragen werden, die ein Leistungsmerkmalsprofil von für die Endeinrichtung EE1 verfügbaren Leistungsmerkmalen spezifiziert. Weiterhin kann mit den in den Rufphasen 1, 2 und 3 übermittelten Meldungen eine Anfragemeldung *cmnRequest* (Common Information Request), z.B. gemäß der ITU-T-Empfehlung H.450.12, übertragen werden, um das Kommunikationssystem KS2 dazu zu veranlassen, eine Leistungsmerkmalsinformation LM2 in das Kommunikationssystem KS1 zu übermitteln. Die Leistungsmerkmalinformation LM2 spezifiziert hierbei ein Leistungsmerkmalsprofil von für die gerufene Endeinrichtung EE2 verfügbaren Leistungsmerkmalen.

Nach einer Verfahrensvariante kann vorgesehen sein, dass das Kommunikationssystem KS2 nicht durch eine spezifische Anfragemeldung sondern bereits durch die Adressauflösungsanforderung als solche zur Übermittlung der Leistungsmerkmalinformation LM2 veranlasst wird.

Im vorliegendem Ausführungsbeispiel kann die Adressauflösungseinrichtung BE2 die zu ihr übermittelte Zielrufnummer 1234 auflösen, da die dadurch identifizierte Endeinrichtung EE2 dem Zuständigkeitsbereich der Adressauflösungseinrichtung BE2 angehört. Die Zielrufnummer 1234 wird durch die Adressauflösungseinrichtung BE2 in die IP-Adresse IPGK2 des Gatekeepers GK2 als derjenigen Netzadresse aufgelöst, über die die Endeinrichtung EE2 zu erreichen ist. Die Adressauflösungseinrichtung BE2 übermittelt daher in Rufphase 4 die IP-Adresse IPGK2 innerhalb einer Adressinformationsmeldung *AccessConf* (Access Confirmation), z.B. gemäß Annex G der ITU-T-Empfehlung H.225.0, zur Adressauflösungseinrichtung BE1.

Die Adressinformationsmeldung AccessConf beinhaltet hierbei erfindungsgemäß die Leistungsmerkmalsinformation LM2 als zusätzliches Informationselement. Die Adressinformationsmeldung *AccessConf* wird durch die Adressauflösungseinrichtung BE1 in Rufphase 5 zum Gatekeeper GK1 weiterübermittelt. Der Gatekeeper GK1 übermittelt daraufhin in Rufphase 6 die IP-Adresse IPGK2 und die Leistungsmerkmalsinformation LM2 innerhalb einer Zugangsbestätigungsmeldung ACF (Admission Confirm), z.B. gemäß H.225.0-Empfehlung, zur rufenden Endeinrichtung EE1.

Nach Rufphase 6 ist die Netzwerkadresse IPGK2, über die die gerufene Endeinrichtung EE2 erreichbar ist, in der Endeinrichtung EE1 sowie im Gatekeeper GK1 und im Gateway GW bekannt. Somit kann eine Verbindungsaufbaumeldung *SETUP,* z.B. gem. H.225.0 Empfehlung, in den Rufphasen 7, 8 und 9 zielgerichtet von der Endeinrichtung EE1 über den Gatekeeper GK1 und den Signalisierungs-Gateway SG zum Gatekeeper GK2 übertragen werden.

Zusätzlich ist in der Endeinrichtung EE1 aufgrund der empfangenen Leistungsmerkmalinformation LM2 bekannt, welche Leistungsmerkmale für die Endeinrichtung EE2 verfügbar sind. Dies kann bei einer Leistungsmerkmalsanforderung LMA, die mit der Verbindungsaufbaumeldung *SETUP* in den Rufphasen 7, 8 und 9 zum Gatekeeper GK2 übertragen wird, berücksichtigt werden. Beispielsweise kann ein Leistungsmerkmal, das von der Ziel-Endeinrichtung EE2 (oder ggf. von einer Stellvertretereinrichtung (Proxy) für diese Endeinrichtung EE2) nicht unterstützt wird, von einer Aufnahme in die Leistungsmerkmalsanforderung LMA ausgeschlossen werden. Eine bereits generierte Leistungsmerkmalsanforderung kann entsprechend abgeändert werden. So kann ein ursprünglich vom Benutzer der Endeinrichtung EE1 beantragtes Leistungsmerkmal *Rufaufschaltung,* z.B. gem. der ITU-T-Empfehlung H.450.11, bereits lokal in der Endeinrichtung EE1 abgelehnt werden, wobei dem Benutzer angeboten wird stattdessen auf ein von der Zielendeinrichtung EE2 unterstütztes, funktionsähnliches Leistungsmerkmal, wie z.B. *Anklopfen,* zurückzugreifen. Optional kann ein von der Ziel-endeinrichtung EE2 nicht unterstütztes Leistungsmerkmal durch die rufende Endeinrichtung EE1 selbständig in ein von der Zielendeinrichtung EE2 unterstütztes, funktionsähnliches Leistungsmerkmal abgeändert werden.

Nach der Übertragung der in Abhängigkeit von der Leistungsmerkmalsinformation LM2 generierten oder geänderten Leistungsmerkmalanforderung LMA zum Gatekeeper GK2 wird von diesem die Verbindungsaufbaumeldung *SETUP* in Rufphase 10 zur gerufenen Endeinrichtung EE2 weitergeleitet. Hierbei werden die mit der Leistungsmerkmalsanforderung LMA angeforderten Leistungsmerkmale für die Endeinrichtung EE2 aktiviert.

Nach einer Variante des erfindungsgemäßen Verfahrens wird die in Rufphase 4 zur Adressauflösungseinrichtung BE1 übermittelte Leistungsmerkmalsinformation LM2 in der Adressauflösungseinrichtung BE1 gespeichert. Optional kann hierbei die Weitergabe der Leistungsmerkmalsinformation LM2 zum Gatekeeper GK1 bzw. zur Endeinrichtung EE1 in den Rufphasen 5 und 6 unterdrückt werden. Die in Rufphase 8 mit der Verbindungsaufbaumeldung *SETUP* zum Gateway GW übermittelte Leistungsmerkmalanforderung LMA kann dann vom Gateway GW abhängig von der gespeicherten Leistungsmerkmalsinformation LM2 weitergeleitet, umgesetzt und/oder terminiert werden. Falls z.B. mit der in Rufphase 8 übermittelten Leistungsmerkmalanforderung LMA das Leistungsmerkmal *Gebührenübernahme* (Reverse Charging) beantragt wird, kann der Gateway GW bzw. der Signalisierungs-Gateway SG den Verbindungsaufbauversuch terminieren, wenn aus der gespeicherten Leistungsmerkmalsinformation LM2 abzuleiten ist, dass das Leistungsmerkmal *Gebührenübernahme* für die Endeinrichtung EE2 nicht verfügbar ist.

Aufgrund der Übermittlung der Leistungsmerkmalsinformation LM2 und ggf. der Leistungsmerkmalsinformation LM1 im Rahmen einer ohnehin erforderlichen, die Rufphasen 1 bis 6 umfassenden Adressauflösungsprozedur, sind zur Durchführung des erfindungsgemäßen Verfahrens keine zusätzlichen Meldungssequenzen erforderlich. Der Verbindungsaufbau wird somit nicht zusätzlich verzögert. Weiterhin kann durch die Vorabübermittlung des Leistungsmerkmalsprofils der gerufenen Endeinrichtung EE2 jede weitere, durch Anforderung nicht unterstützter Leistungsmerkmale bedingte Verzögerung vermieden werden.

Das vorstehend beschriebene Ausführungsbeispiel lässt sich ohne Weiteres dahingehend verallgemeinern, dass die Kommunikationssysteme KS1 und KS2 als verschiedene administrative Domänen oder verschiedene sog. Gatekeeper-Zonen innerhalb eines einzigen VoIP-Systems aufgefasst werden. Weiterhin können die Kommunikationssysteme KS1 und KS2 auch unterschiedliche Verbindungssteuerprotokolle, z.B. KS1 ein H.323 Protokoll und KS2 ein SIP-Protokoll, aufweisen.

## Patentansprüche

1. Verfahren zum Steuern von Leistungsmerkmalen in paketorientierten Kommunikationssystemen (KS1, KS2), bei dem
vor Übertragung einer Verbindungsaufbaumeldung (SETUP) von einer Ursprungs-Endeinrichtung (EE1) zu einer Ziel-Endeinrichtung (EE2) eine ein Leistungsmerkmalprofil der Ziel-Endeinrichtung (EE2) betreffende Leistungsmerkmalinformation (LM2) in Richtung der Ursprungs-Endeinrichtung (EE1) übermittelt wird, und
mit der Verbindungsaufbaumeldung (SETUP) eine Leistungsmerkmalanforderung (LMA) abhängig von der übermittelten Leistungsmerkmalinformation (LM2) übertragen wird.

2. Verfahren nach Anspruch 1,
**dadurch gekennzeichnet,**
**dass** die Übermittlung der Leistungsmerkmalinformation (LM2) durch eine spezifische Anfragemeldung (cmnRequest) veranlasst wird.

3. Verfahren nach Anspruch 1,
**dadurch gekennzeichnet,**
**dass** die Übermittlung der Leistungsmerkmalinformation (LM2)
durch eine eigentlich für andere Zwecke vorgesehene Signalisierungsmeldung veranlasst wird.

4. Verfahren nach einem der vorhergehenden Ansprüche,
**dadurch gekennzeichnet,**
**dass** die Leistungsmerkmalinformation (LM2) im Rahmen einer Adressauflösungsprozedur übermittelt wird.

5. Verfahren nach Anspruch 4,
**dadurch gekennzeichnet,**
**dass** die Leistungsmerkmalinformation (LM2) als zusätzliches Informationselement innerhalb einer Adressinformationsmeldung (AccessConf) übermittelt wird.

6. Verfahren nach einem der vorhergehenden Ansprüche,
**dadurch gekennzeichnet,**
**dass** die Leistungsmerkmalinformation (LM2) zur Ursprungs-Endeinrichtung (EE1) übermittelt wird, und
die nachfolgend zu übertragende Leistungsmerkmalanforderung (LMA) durch die Ursprungs-Endeinrichtung (EE1) abhängig von der empfangenen Leistungsmerkmalinformation (LM2) generiert oder geändert wird.

7. Verfahren nach einem der vorhergehenden Ansprüche,
**dadurch gekennzeichnet,**
**dass** die Leistungsmerkmalinformation (LM2) zur Ursprungs-Endeinrichtung (EE1) übermittelt wird, und
eine Bedienoberfläche der Ursprungs-Endeinrichtung (EE1) abhängig von der empfangenen Leistungsmerkmalinformation (LM2) ausgebildet wird.

8. Verfahren nach einem der vorhergehenden Ansprüche,
**dadurch gekennzeichnet,**
**dass** die Leistungsmerkmalinformation (LM2) in einer Netzübergangseinrichtung (GW) gespeichert wird, und
die nachfolgend zu übertragende Leistungsmerkmalanforderung (LMA) durch die Netzübergangseinrichtung (GW) abhängig von der gespeicherten Leistungsmerkmalinformation (LM2) weitergeleitet und/oder umgesetzt wird.

9. Verfahren nach einem der vorhergehenden Ansprüche,
**dadurch gekennzeichnet,**
**dass** die Verbindungsaufbaumeldung (SETUP) über ein Kommunikationssystem (KS1, KS2) gemäß der ITU-T-Empfehlung H.323 oder gemäß dem SIP-Standard (Session Initiation Protocol) des IETF-Forums übertragen wird.

## Claims

1. Method for controlling features in packet-oriented communication systems (KS1, KS2), wherein
feature information (LM2) relating to a feature profile of the destination terminating device (EE2) is transmitted in the direction of the originating terminating device (EE1) before a connection setup signal (SETUP) is sent from an originating terminating device (EE1) to a destination terminating device (EE2), and wherein
a feature request (LMA) is transmitted with the connection setup signal (SETUP) as a function of the transmitted feature information (LM2).

2. Method according to claim 1,
**characterised in that**
transmission of the feature information (LM2) is prompted by means of a specific inquiry signal (cmnRequest).

3. Method according to claim 1,
**characterised in that**
transmission of the feature information (LM2) is prompted by means of a signal which is actually intended for other purposes.

4. Method according to one of the preceding claims,
**characterised in that**
the feature information (LM2) is transmitted as part of an address resolving procedure.

5. Method according to claim 4,
**characterised in that**
the feature information (LM2) is transmitted as an additional information element within an address information signal (AccessConf).

6. Method according to one of the preceding claims,
**characterised in that**
the feature information (LM2) is transmitted to the originating terminating device (EE1), and the feature request being transmitted subsequently (LMA) is generated or modified by the originating terminating device (EE1) as a function of the received feature information (LM2).

7. Method according to one of the preceding claims,
**characterised in that**
the feature information (LM2) is transmitted to the originating terminating device (EE1), and a user interface of the originating terminating device (EE1) is embodied as a function of the received feature information (LM2).

8. Method according to one of the preceding claims,
**characterised in that**
the feature information (LM2) is stored in a network interworking facility (GW), and the feature request being transmitted subsequently (LMA) is forwarded and/or converted by the network interworking facility (GW) as a function of the stored feature information (LM2).

9. Method according to one of the preceding claims,
**characterised in that**
the connection setup signal (SETUP) is transmitted via a communication system (KS1, KS2) conforming to ITU-T recommendation H.323 or to the SIP (Session Initiation Protocol) standard of the IETF Forum.

## Revendications

1. Procédé pour commander des services dans des systèmes de communication (KS1, KS2) orientés paquets, dans lequel, avant la transmission d'un message d'établissement de liaison (SETUP) d'un équipement terminal d'origine (EE1) à un équipement terminal cible (EE2), une information sur les services (LM2) concernant un profil de service de l'équipement terminal cible (EE2) est transmise en direction de l'équipement terminal d'origine (EE1), et
avec le message d'établissement de liaison (SETUP), une demande de service (LMA) est transmise en fonction de l'information transmise sur les services (LM2).

2. Procédé selon la revendication 1,
**caractérisé en ce que**
la transmission de l'information sur les services (LM2) est demandée par un message de demande (cmnRequest) spécifique.

3. Procédé selon la revendication 1,
**caractérisé en ce que**
la transmission de l'information sur les services (LM2) est ordonnée par un message de signalisation prévu à vrai dire pour d'autres usages.

4. Procédé selon l'une quelconque des revendications précédentes,
**caractérisé en ce que**
l'information sur les services (LM2) est transmise dans le cadre d'une procédure de résolution d'adresse.

5. Procédé selon la revendication 4,
**caractérisé en ce que**
l'information sur les services (LM2) est transmise en tant qu'élément d'information supplémentaire à l'intérieur d'un message d'information d'adresse (AccessConf).

6. Procédé selon l'une quelconque des revendications précédentes,
**caractérisé en ce que**
l'information sur les services (LM2) est transmise à l'équipement terminal d'origine (EE1), et la demande sur les services (LM2) à transmettre ensuite est générée ou modifiée par l'équipement terminal d'origine (EE1) en fonction de l'information reçue sur les services (LM2).

7. Procédé selon l'une quelconque des revendications précédentes,
**caractérisé en ce que**
l'information sur les services (LM2) est transmise à l'équipement terminal d'origine (EE1), et une interface utilisateur de l'équipement terminal d'origine (EE1) est réalisée en fonction de l'information reçue sur les services (LM2).

8. Procédé selon l'une quelconque des revendications précédentes,
**caractérisé en ce que**
l'information sur les services (LM2) est stockée dans un dispositif de transfert de réseau (GW), et la demande sur les services (LMA) à transmettre ensuite est transmise et/ou mise en oeuvre par le dispositif de transfert de réseau (GW) en fonction de l'information stockée sur les services (LM2).

9. Procédé selon l'une quelconque des revendications précédentes,
**caractérisé en ce que**
le message d'établissement de liaison (SETUP) est transmis par un système de communication (KS1, KS2) selon la recommandation H.323 de ITU-T ou selon le standard SIP (Session Initiation Protocol) du forum IETF.
